(19) **Europäisches Patentamt**
**European Patent Office**
**Office européen des brevets**

(11) Numéro de publication: **0 261 025 B2**

(12) **NOUVEAU FASCICULE DE BREVET EUROPEEN**

(45) Date de publication de nouveau fascicule du brevet:
**12.10.94**

(51) Int. Cl.5: **D21B 1/32**, D21D 5/00

(21) Numéro de dépôt: 87402040.7

(22) Date de dépôt: **14.09.87**

(54) **Procédé et installations de traitement de vieux papiers imprimés.**

(30) Priorité: **15.09.86 FR 8612856**

(43) Date de publication de la demande:
**23.03.88 Bulletin 88/12**

(45) Mention de la délivrance du brevet:
**27.12.90 Bulletin 90/52**

(45) Mention de la décision
concernant l'opposition:
**12.10.94 Bulletin 94/41**

(84) Etats contractants désignés:
**DE ES FR GB IT SE**

(56) Documents cités:
**EP-A- 0 092 124      AT-A- 343 999**
**AT-A- 374 839      DE-A- 2 908 660**
**DE-B- 2 610 581      DE-C- 3 005 681**
**GB-A- 2 033 784      US-A- 3 791 917**

**"Die Fraktionierung von Faserstoffen aus Altpapier", publié dans Wochenblatt für Papierfabrikation 6/1978**

**"Waste paper preparation plant and systems" publié dans Paper Technolgy, Juin/Août 1973**

(73) Titulaire: **E. et M. LAMORT**
**Rue de la Fontaine Ludot**
**F-51302 Vitry-le-François (FR)**

(72) Inventeur: **Lamort, Jean-Pierre**
**3 boulevard Carnot**
**F-51300 Vitry Le François (FR)**

(74) Mandataire: **Loyer, Bertrand et al**
**Cabinet Pierre Loyer**
**77, rue Boissière**
**F-75116 Paris (FR)**

EP 0 261 025 B2

Rank Xerox (UK) Business Services
(3. 10/3.0 9/3.3.3)

**Description**

La présente invention se rapporte au traitement des vieux papiers y compris les papiers imprimés en vue de la réalisation d'une pâte à papier blanche de qualité supérieure, permettant notamment l'impression.

La récupération et la réutilisation des vieux papiers occupent une place de plus en plus importante dans la fabrication des papiers et cartons. La réalisation de la pâte à papier blanche, à partir de vieux papiers imprimés suit en général les traitements successifs suivants :

- un pulpage où le papier est désintégré en pâte,
- une phase de pré-épuration qui élimine la majeure partie des contaminents autre que l'encre : notamment les contaminants de grandes dimensions divisés ou non (par exemple : ficelle, agrafes, feuilles plastiques, les contaminants les plus denses (par centrifugation),
- un désencrage, pour éliminer l'encre provenant de l'impression des papiers. Ce désencrage est généralement réalisé de deux manières, soit par flottation, soit par lavage. Ces traitements sont complèmentaires pour obtenir de bons résultats,
- une phase d'épuration fine qui élimine la presque totalité des contaminants résiduels,
- une phase de dispersion des contaminants qui demeurent présents et qui adhérent aux fibres : ce sont généralement des encres, des cires, hot-melts, colles, polyéthylènes etc... On disperse ces contaminants par un traitement à chaud comprenant un épaississement de la pâte, pour la porter à une concentration comprise entre 30 et 40 %, suivi d'une trituration à chaud, imposant à la pulpe des efforts de friction à une température comprise entre 50°C et 100°C, ce qui disperse totalement ou ramollit les contaminants en vue de leur élimination ultérieure, et favorise leur agglomération (liants thermo-fusibles, colles notamment),
- la pâte obtenue subit alors un éventuel traitement de blanchîment, puis elle est stockée en attente d'utilisation ultérieure.

Bien entendu, suivant la qualité du papier requise, chacune de ces étapes peut être plus ou moins développée, et certaines ne sont pas toujours nécessaires; notamment la dispersion à chaud et le blanchîment.

Les résultats d'une telle chaîne de traitement sont assez bons (on obtient un degré de blancheur de la pâte permettant de réemployer celle-ci pour fabriquer des sortes identiques à celles des papiers traités), mais les traitements consomment des quantités d'eau et d'énergie très importantes, notamment la flottation (grand débit, faible concentration en matières sèches); l'épuration fine souvent réalisée par hydrocyclones et la dispersion à chaud demandent des investissements importants ; en outre ces traitements sont des sources de pollutions importantes en raison principalement des grandes quantités d'eau polluée rejetées. Et ces inconvénients font perdre l'intéret de la réutilisation des vieux papiers imprimés pour la réalisation de la pâte blanche.

D'autre part, dans l'industrie papetière, il est connu que l'on peut faire subir à la pâte, composée de fibres de cellulose, un fractionnement préalable à leur raffinage, ce fractionnement divisant la pâte en deux parties, l'une contenant des fibres longues, l'autre des fibres courtes.

Cette technique du fractionnement a été utilisée dans le but de raffiner séparément les fibres courtes et les fibres longues, ces dernières demandant un travail de raffinage beaucoup plus puissant que les premières. En fait les gains d'énergie obtenus sont peu significatifs.

Un tel fractionnement n'a pas de raison d'être, dans le domaine de la récupération des vieux papiers, dont les fibres ont déjà fait l'objet d'un raffinage; cependant cette technique du fractionnement est parfois utilisée dans la phase finale de blanchîment. En effet les fibres longues necessitent souvent un blanchîment différent de celui de fibres courtes lorsque ces fibres courtes sont principalement constituées de pâte mécanique, parfois même les fibres courtes n'en subissent aucun. Il est alors nécessaire de ne traiter que la partie des fibres intéressée. Le fractionnement est réalisé après le désencrage et l'épuration fine dans le but d'appliquer des traitements de blanchîment spécifiques pour chaque fraction de fibres déjà désencrée et épurée.

Un procédé de traitement de vieux papiers et une installation pour sa mise en oeuvre tels que decrits dans le preambule des revendications 1 et 6 sont deja connus du document DE-A 2 908 660.

Le fractionnement avant blanchîment est intéressant dans la mesure où il permet d'améliorer sensiblement la blancheur de la pâte en agissant sur une faible fraction de celle-ci, surtout lorsqu'un traitement à chaud est nécéssaire, celui-ci ayant tendance à abaisser le degré de blancheur de la pâte. En revanche elle ne permet pas de réaliser de sensibles économies de consommation d'énergie, ni d'investissements.

La présente invention a pour objectif de réaliser des économies d'investissements, de consommation d'énergie et d'eau, tout en obtenant une pâte de qualité supérieure, susceptible notamment de permettre sa réutilisation pour la fabrication de qualités de papier haut de gamme.

2

Elle a pour objet un procedé de traitement de vieux papiers du type comportant des phases de pulpage (1), de pré-epuration (2) un fractionnement (3) de la pate en fibres longues et en fibres courtes, un désencrage par flottation (6) et un epaississement (7) de la fraction fibres courtes, un epaississement (9) de la fraction fibres longues caracterisé en ce que la fraction à fibres longues subit au moins un épaississement-lavage (12) apres une epuration fine (11) et en ce que les eaux des differentes étapes d'epaississement des deux fractions de fibres sont réutilisées dans la chaine de traitement par recyclage, ce recyclage etant opéré : au niveau de la flottation (6) des fibres courtes, au niveau de l'epuration fine (11) des fibres longues et en amont du fractionnement (3) au niveau du pulpage (1) et de la pré-epuration (2) afin de reduire à la fois le volume d'eau repeté, la pollution et la consommation d'eau.

L'invention est encore remarquable par les caractéristiques suivantes :
- les eaux d'épaississement de la fraction à fibres courtes sont en priorité réutilisées dans le traitement de désencrage et le surplus est recyclé dans l'épuration fine.
- les eaux de l'épaississement-lavage de la fraction à fibres longues sont en priorité recyclées dans l'épuration fine en complément du surplus des eaux d'épaississement de la fraction à fibres courtes, et le surplus est recyclé en amont du fractionnement.
- la fraction à fibres longues subit, avant l'épuration fine , un traitement à chaud comprenant un épaississement et une trituration à chaud dans des appareils épaississeurs et triturateurs connus.
- les eaux de l'épaississement de la fraction à libres longues sont recyclées avant le fractionnement dans le pulpage et la pré-épuration.
- le surplus des eaux de l'épaississement-lavage est mélangé aux eaux de l'épaississement qui précède la trituration à chaud.
- des moyens sont prévus pour régler les concentrations de la fraction à libres courtes à environ 1 à 1,5% en volume pour le désencrage par flottation, et à environ 20% en sortie de l'épaississement suivant, et les concentrations de la fraction à fibres longues à environ 30% en sortie du premier épaississement (avant trituration), entre 0,5 et 1% dans l'épuration fine , et de l'ordre de 20% en sortie de l'épaississeur-laveur.

L'invention a encore pour objet une installation de traitement de vieux papiers pour mettre en oeuvre le procedé de la revendication 1 du type comportant des appareils de pulpage (1), du pré-epuration (2) de fractionnement (3) de la pate en fibres courtes et fibres longues, de désencrage par flottation (6) pour les fibres courtes et d'epaississement (7 et 9) caracterisé en ce que elle comporte un appareil d'epuration fine (11) suivi d'un appareil d'épaississement lavage (12) pour la fraction à fibres longues, au moins un reservoir (20) de reception des eaux d'epaississement et des conduites de retocer des eaux d'epaississement dans la chaine de traitement, une conduite (14) de recyclage des eaux vers l'appareil de flottation (6), une conduite (18) de recyclage des eaux vers l'appareil d'epuration fine (11) et une conduite (19) de recyclage des eaux vers le pulpage (1) et la pré-epuration (2) en amont du fractionnement (3)

L'invention est encore remarquable par le fait que l'installation comporte :
- une conduite de recyclage des eaux d'épaississement de la fraction à fibres longues en amont de l'appareil de fractionnement dans les appareils de pulpage et de pré-épuration.
- une conduite pour réutiliser en priorité les eaux d'épaississement de la fraction à fibres courtes dans l'appareil de désencrage et une conduite pour réutiliser en priorité les eaux d'épaississement-lavage de la fraction à fibres longues et le surplus des eaux d'épaississement dans l'appareil d'épuration fine.
- entre l'appareil de fractionnement et les appareils d'épuration-fine , dans l'ordre, un appareil d'épaississement et un triturateur à chaud , connus en soi, pour traiter à chaud la pâte et une conduite d'évacuation des eaux d'épaississement alimentant un réservoir.
- un bassin pour la récupération des eaux d'épaississement de la fraction à fibres courtes , des eaux d'épaississement-lavage de la fraction à fibres longues , et alimenté en eau pure pour le démarrage de l'installation, un bassin pour la récupération des eaux d'épaississement de la fraction à fibres longues , et en ce que les bassins et communiquent de telle sorte que le trop plein du bassin se déverse dans le bassin.

De préférence, les concentrations en volume pour un tel fonctionnement sont de l'ordre de :
- fibres courtes : 1 à 1,5 % dans l'appareil de désencrage
  20 % en sortie de l'épaisseur
- fibres longues : 30 % dans l'appareil de trituration
  0,5 à 1 % sans l'appareil d'épuration fine
  20 % en sortie de l'épaississement-lavage

A titre d'exemple de réalisation et pour mieux comprendre l'invention, on a représenté au dessin annexé un schéma d'une chaîne de traitement de vieux papiers selon l'invention

EP 0 261 025 B2

Une première partie du traitement consiste à transformer un volume de vieux papiers imprimés en un volume fluide de fibres, débarrassées des contaminants volumineux : ficelles, plastique, agrafes, etc. Cette transformation est réalisée par un pulpeur 1 dans lequel le papier, mélangé à l'eau , est désintégré en fibres séparées.

La pâte est ensuite, dans une phase de pré-épuration 2, débarrassée des principaux contaminants ; notamment les contaminants de grandes dimensions, divisés ou non divisés par le pulpage, et les contaminants de haute densité, ces derniers étant séparés de préférence par centrifugation.

Pulpage et pré-épuration sont effectués dans des des appareils de type connu.

L'important au sens de l'invention est que la pâte, en sortie de cette première partie ne contienne aucun contaminant de grandes dimensions. La pâte subit un fractionnement 3 dans un appareil qui sépare les fibres courtes 4 des fibres longues 5. Le fractionnement est obtenu par un tamisage très fin afin que la partie de pâte qui traverse le tamis ne contienne plus de fibres longues, lesquelles sont arrêtées par le tamis et constituent la fraction de fibres longues.

Cette opération, par essence, provoque non seulement un fractionnement 3 suivant la longueur des fibres, mais également une épuration très sélective, en ce sens que la fraction à fibres courtes acceptée par le tamis est débarrassée de tous les contaminants qui, non éliminés dans la pré-épuration 2, se trouvent dans la fraction refusée, c'est-à-dire la fraction à fibres longues.

D'autre part, l'encre contenue dans la pâte avant le fractionnement, étant composée de pigments très fins, a en majorité tendance à suivre les fibres courtes. Ainsi en sortie du fractionnement 3, la fraction à fibres courtes 4 comporte essentiellement des fibres courtes, des encres , des charges et des particules très fines, et la fraction longue 5 comporte des fibres longues, une petite quantité d'encre adhérant aux fibres, des adhésifs, des plastiques, des particules moyennement volumineuses, et des charges.

Chaque fraction de la pâte peut ainsi être traitée spécifiquement. Très généralement la fraction 4 à fibres courtes est suffisamment propre, c'est-à-dire débarrassée d'impuretés, pour ne plus avoir besoin d'épuration fine, ni de traitement à chaud, et c'est sur la fraction 5 à fibres longues qu'il faut concentrer ces deux moyens lourds de décontamination.

La fraction 4 à fibres courtes est envoyée dans un appareil de désencrage par flottation 6 pour éliminer les pigments présents dans la suspension. La technique de désencrage par flottation est préférée car elle permet d'éliminer la quasi totalité des particules hydrophobes (encres ou autres) sans perdre de fibres, alors que le lavage entraîne une perte des éléments fins, des charges, et des fibres courtes.

En sortie du désencrage 6 par flottation, la pâte est propre et peut être conduite dans un appareil épaississeur pour être concentrée. La pâte est en effet désencrée à faible concentration, de l'ordre de 1 à 1,5%, et il est nécessaire de réduire ce volume pour le stockage. La pâte obtenue par cet épaississement peut ensuite soit être stockée directement, soit, selon le degré de blancheur désiré, être soumise à un blanchîment 8'.

L'eau extraite des épaississeurs 7 est conduite dans un bassin 20a et sa propreté permet de la recirculer 14 en priorité dans l'appareil de désencrage 6 par flottation.

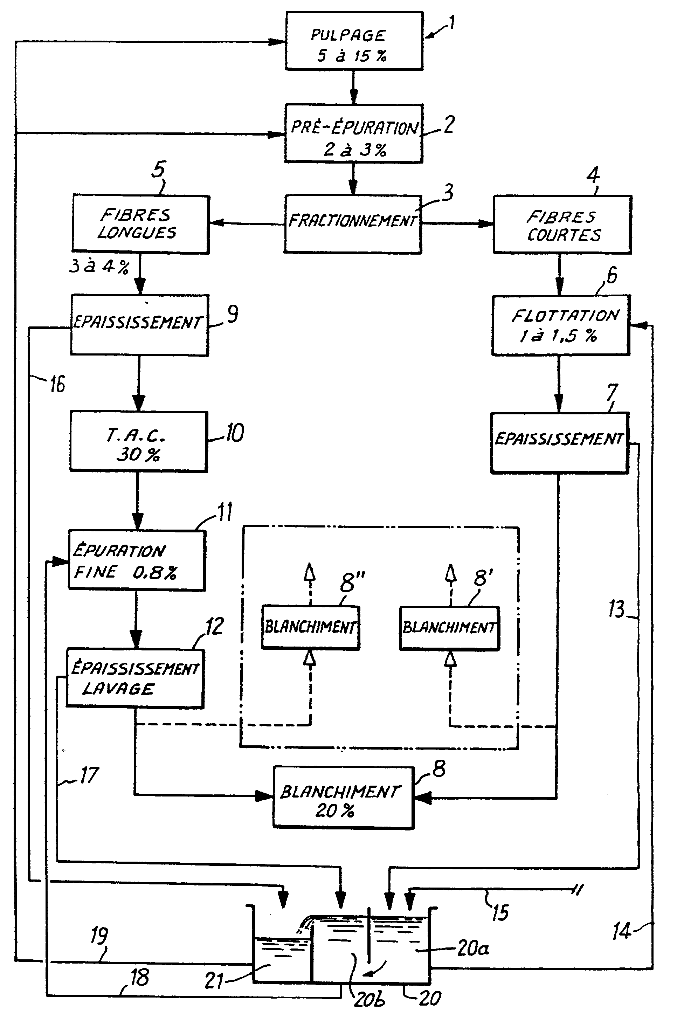

De l'autre côté de la chaîne, la fraction 5 à fibres longues subit, dans l'exemple de réalisation de la figure 1, un traitement à chaud 9, 10 une épuration fine 11 et un épaississement-lavage 12.

Comme cela a été dit, le traitement à chaud a pour résultat de détacher les contaminants adhérents sur les fibres, sous l'effet d'une friction intense fibre sur fibre. L'élévation de température favorise le ramollissement et l'agglomération de certains contaminants notamment les matières thermo-fusibles. Le traitement à chaud comporte deux étapes:

- un épaississement 9 portant la pâte à des concentrations de l'ordre de 30 à 40 % en volume de matières sèches,
- une trituration 10 , ces deux étapes sont réalisées dans des appareils épaississeurs et triturateurs de types connus.

L'eau 16 extraite de l'épaississement 9 de la fraction 5 à fibres longues qui contient une petite quantité d'encre est réjetée dans un bassin 21 et recyclée 19 dans la première partie de la chaine 1, 2 en amont du fractionnement.

La pâte, après dispersion des contaminants et des encres dans l'appareil de trituration, est épurée finement 11, l'eau d'épuration 18 étant prélevée dans un bassin collecteur 20b des eaux d'épaississements. Ce traitement, effectué dans une série d'épurateurs-fins de type connu en soi, élimine les particules refusées lors du fractionnement 3 ainsi que les adhésifs et autres colles agglomérés par la trituration. La dilution nécessaire à cette épuration agit d'autant plus favorablement qu'elle abaisse la température de la pâte et durcit les nouvelles particules agglomérées, qui sont ainsi plus facilement éliminées.

En sortie des appareils d'épuration fine 11, la pâte ne contient pratiquement que des fibres longues, et encore quelques encres dispersées. Elle subit alors un épaississement-lavage 12, dans un appareil de type

4

EP 0 261 025 B2

connu ; cette étape a pour but :

- de laver la pâte, ce lavage éliminant les encres dispersées par la trituration, et les quelques fibres courtes et particules très fines encore présentes,
- de concentrer la pâte, que l'on peut stocker telle quelle, ou envoyer vers un éventuel stade de blanchîment.

L'eau 17 extraite de l'épaississement-lavage 12 est rejetée dans un bassin 20b où elle se mélange au surplus de l'eau de l'épaississement 7 de la fraction à fibres courtes. L'eau 17 est ainsi recyclée en priorité dans l'épuration fine 11, l'excédent étant recyclée en amont du fractionnement 3, avec l'eau de l'éventuel épaississement 9.

La petite quantité d'encre entraînée avec la fraction à fibres longues suit l'eau extraite par les deux épaississements 9, 12 successifs existant sur cette fraction 5 et dont la majeure partie en fait est réinjectée 19 avant le fractionnement 3. Il s'ensuit que la grande partie de cette encre, suivant la fraction à fibres courtes est éliminée à la flottation. La fraction 5 est donc désencrée par lavage 12 et l'encre du filtrat est flottée ultérieurement.

Selon une variante de réalisation, le traitement de la fraction 5 à fibres longues peut être simplifié ou modifié. En effet, selon la qualité des vieux papiers, il peut être superflu de pratiquer une dispersion à chaud 10, ou bien pour d'autres raisons, il peut être préférable de pratiquer l'epuration fine avant le traitement à chaud 10.

L'important pour cette fraction à fibres longues 5, au sens de l'invention est que la trituration à chaud 10 soit précédé d'un épaississement 9, et que l'épuration fine 11, nécessaire pour le nettoyage des refus de fractionnement 3, soit suivie d'un épaississement-lavage 12, et que la ou les eaux d'épaississement de la fraction à fibres longues soient recirculées avant le fractionnement 3.

Par ailleurs, la figure annexée représente des blanchîments séparés 8',8''. Il est bien évident que les pâtes peuvent être soit blanchies ensemble 8, soit blanchies séparément et stockées séparément, ou même stockées ensemble.

Le circuit d'alimentation et de circulation des eaux de traitement prévoit une réutilisation maximale de ces dites eaux.

Au moins deux bassins 20 et 21 sont prévus, le trop-plein du bassin 20 s'écoulant dans le bassin 21. Le bassin 20 est divisé de préférence en deux parties 20a et 20b communicant entre elles.

Le bassin 20a est alimenté par l'eau 13 de l'épaississement 7 des fibres courtes, et par de l'eau 15 pure extérieure permettant de mettre en route l'installation et de faire l'appoint au fur et à mesure de l'extraction de la bonne pâte. L'eau de ce bassin est suffisamment propre pour alimenter le désencrage par flottation 6.

Le bassin 20b est alimenté par l'eau 17 d'épaississement des fibres longues et l'eau provenant du bassin 20a; il alimente 18 en priorité le traitement d'épuration fine, et par son trop plein ,le bassin 21

Le bassin 21 est alimenté par le trop plein du bassin 20b et par l'eau du premier épaississement 9 de la fraction 5 à fibres longues. Cette eau est recyclée avant le fractionnement 3 dans le pulpage 1 et dans la pré-épuration 2.

On voit donc que ce procédé de traitement recircule constamment toute l'eau utilisée avec une seule arrivée d'eau extérieure 15.

Le procédé de traitement avec recirculation des eaux, combiné à des concentrations de pâte déterminées permet d'obtenir une faible consommation d'eau extérieure.

A titre d'exemple les concentrations données en pourcentage de volume de matières sèches sont les suivantes :

- le pulpage 5 à 15 %
- la pré-épuration 2 à 3 %
- la flottation 1 à 1,5 %
- la pâte épaissie après désencrage par flottation 20 %
- la fraction à fibres longues en sortie du fractionnement 3 à 4 %
- la trituration à chaud 30 %
- l'épuration fine 0,5 à 1 %
- la pâte épaissie après épuration 20 %

Et pour cet exemple, des résultats d'essai donnent les ordres de grandeur de consommation d'eau suivants :

Pour une quantité de pâte produite d'environ 7,5 T/h les volumes d'eau en circulation sont d'environ:

5

| Alimentation exterieure | 80m3/h | = 8 % |
|---|---|---|
| Epaississement | 420m3/h | = 42 % |
| Epaississement | 500m3/h | = 50 % |
| TOTAL : | 1000m3/h | |

Les résultats montrent que pour une quantité de 1000 m3/h d'eau nécessaire à l'obtention, par les méthodes connues, de 7,5 T/h de bonne pâte concentrée à 20 %, le procédé ne demande qu'environ 80 m3/h d'eau exterieure soit environ 8 % du besoin total, d'où une économie considérable sur la demande réelle d'eau, et une diminution de 90 % environ des rejets d'eau polluée.

Les avantages apportés par ce procédé sont nombreux et importants :

- le fait de fractionner avant le désencrage par flottation ne fait intervenir la flottation, la dispersion et l'épuration que sur une fraction de la production. La fraction à fibres courtes représentant souvent plus de la moitié du tonnage produit, l'économie est de plus de 50 % des investissements et de l'énergie correspondant à ces traitements,
- la flottation n'agissant que sur une fraction de pâte, très riche proportionnellement en encre, est plus efficace. En outre, le désencrage étant effectué par flottation sur des fibres courtes, la perte en fibres longues, qui ont tendance à flotter facilement , est évitée. La teneur en fibres longues étant un facteur important dans la qualité du papier, cet avantage est considérable,
- les traitements d'épaississements de la fraction à fibres longues sont plus aisés du fait que ces fibres retiennent moins l'eau,
- l'opération de lavage n'étant effectuée que sur la fraction à fibres longues présente une perte minimum en fibres courtes,
- la recirculation de l'eau diminue la consommation, et très sensiblement la pollution.

## Revendications

1. Procedé de traitement de vieux papiers du type comportant des phases de pulpage (1), de pré-epuration (2) un fractionnement (3) de la pate en fibres longues et en fibres courtes, un désencrage par flottation (6) et un epaississement (7) de la fraction fibres courtes, un epaississement (9) de la fraction fibres longues caracterisé en ce que la fraction à fibres longues subit au moins un épaississement-lavage (12) apres une epuration fine (11) et en ce que les eaux des differentes étapes d'epaississement des deux fractions de fibres sont réutilisées dans la chaine de traitement par recyclage, ce recyclage etant opéré : au niveau de la flottation (6) des fibres courtes, au niveau de l'epuration fine (11) des fibres longues et en amont du fractionnement (3) au niveau du pulpage (1) et de la pré-epuration (2) afin de reduire à la fois le volume d'eau repeté, la pollution et la consommation d'eau.

2. Procédé de traitement de vieux papiers pour la réalisation de pâte à papier selon la revendication 1 caractérisé en ce que les eaux d'épaississement (13) de la fraction à fibres courtes (4) sont en priorité réutilisées dans le traitement de désencrage (6) et le surplus est recyclé dans l'épuration fine (11).

3. Procédé de traitement de vieux papiers, pour la réalisation de la pâte à papier selon la revendication 2 caractérisé en ce que les eaux de l'épaississement (12) de la fraction à fibres longues (5) sont en priorité recylées dans l'épuration fine (11) en complément du surplus des eaux (13), et le surplus est recyclé en amont du fractionnement (3).

4. Procédé de traitement de vieux papiers, pour la réalisation de la pâte à papier selon la revendication 1 caractérisé en ce que la fraction (5) à fibres longues subit, avant l'épuration fine (11), un traitement à chaud comprenant un épaississement (9) et une trituration à chaud (10) dans des appareils épaississeurs et triturateurs connus.

5. Procédé de traitement de vieux papiers pour la réalisation de la pâte à papier selon l'une quelconque des revendications (1 à 4) caractérisé en ce que des moyens sont prévus pour régler les concentrations de la fraction (4) à fibres courtes à environ 1 à 1,5% en volume pour le désencrage (6) par flottation, et à environ 20% en sortie de l'épaississement (7), et les concentrations de la fraction (5) à fibres longues à environ 30% en sortie du premier épaississement (9), entre 0,5 et 1% dans l'épuration fine (11), et de l'ordre de 20% en sortie de l'épaississeur-laveur (12).

**6.** Installation de traitement de vieux papiers pour mettre en oeuvre le procedé de la revendication 1 du type comportant des appareils de pulpage (1), de pré-epuration (2) de fractionnement (3) de la pate en fibres courtes et fibres longues, de désencrage par flottation (6) pour les fibres courtes et d'epaississement (7 et 9) caracterisé en ce que elle comporte un appareil d'epuration fine (11) suivi d'un appareil d'épaississement lavage (12) pour la fraction à fibres longues, au moins un reservoir (20) de reception des eaux d'epaississement et des conduites de retocer des eaux d'epaississement dans la chaine de traitement, une conduite (14) de recyclage des eaux vers l'appareil de flottation (6), une conduite (18) de recyclage des eaux vers l'appareil d'epuration fine (11) et une conduite (19) de recyclage des eaux vers le pulpage (1) et la pré-epuration (2) en amont du fractionnement (3)

**7.** Installation de traitement de vieux papiers selon la revendication 6, caractérisée en ce qu'elle comporte entre l'appareil de fractionnement (3) et les appareils d'épuration-fine (11), dans l'ordre, un appareil d'épaississement (9) et un triturateur à chaud (10), connus en soi, pour traiter à chaud la pâte et une conduite (16) d'évacuation des eaux d'épaississement (9) alimentant un réservoir (21).

**8.** Installation de traitement selon la revendication 6 caractérisée en ce qu'elle comporte un bassin (20) pour la récupération des eaux d'épaississement (7) de la fraction à fibres courtes (4), des eaux d'épaississement-lavage (12) de la fraction à fibres longues (5), et une conduite d'amenie (15) en eau pure pour le démarrage de l'installation, un bassin (21) pour la récupération des eaux épaississement (9) de la fraction à fibres longues (5), et en ce que les bassins (20) et (21) communiquent de telle sorte que le trop plein du bassin (20) se déverse dans le bassin (21).

**Claims**

**1.** A method of treating waste paper, of the type comprising the following phases: pulping (1), pre-cleaning (2), fractional separation (3) of the pulp into long fibres and short fibres, removal of ink by flotation (6) and a thickening of the short fibre fraction, a thickening (9) of the long fibre fraction, characterised in that the long fibre fraction undergoes at least one thickening-washing (12) after the fine cleaning (11); and in that the water resulting from the various stages of thickening of the two fractions of fibres are re-used in the treatment chain by recycling, this recycling being performed: at the flotation stage (6), for the short fibres, at the fine cleaning stage (11) for the long fibres and upstream of the fractional separation stage (3) at the pulping (1) and pre-cleaning (2) stage in order to reduce both the volume of waste water, pollution and water consumption.

**2.** A method of treating waste paper to produce paper pulp according to Claim 1, characterised in that the water (13) from thickening the short fibre fraction (4) is preferably re-used in the ink removing treatment (6) the surplus being recycled into the fine cleaning stage (11).

**3.** A method of treating waste paper to produce paper pulp according to Claim 2, characterised in that the water (12) from thickening the long fibre fraction (5) is preferably recycled to the fine cleaning stage (11) to supplement the surplus water (13), the surplus being recycled upstream of the fractional separation stage (3).

**4.** A method of treating waste paper to produce paper pulp according to Claim 1, characterised in that the long fibre fraction (5), prior to fine cleaning (11), undergoes a heat treatment comprising a thickening stage (9) and a hot slushing stage (10) in prior art thickening and slushing apparatus.

**5.** A method of treating waste paper to produce paper pulp according to any one of Claims 1 to 4, characterised in that means are provided for regulating the concentrations of the short fibre fraction (4) to approximately 1 to 1.5% by volume for the ink removal stage (6) by flotation, and to approximately 20% at the outlet from the thickening stage (7) and the concentrations of the long fibre fraction (5) to approximately 30% at the outlet from the first thickening stage (9), between 0.5 and 1% in the fine cleaning stage (11) and of the order of 20% at the outlet from the thickening-washing stage (12).

**6.** A plant for the treatment of waste paper and adapted to apply the method according to Claim 1, of the type comprising equipment for pulping (1), pre-cleaning (2), fractional separation (3) of the pulp into short fibres and long fibres, for ink removal by flotation (6), for the short fibres and for thickening (7 and 9), characterised in that it comprises a fine cleaning apparatus (11) followed by a thickening-washing apparatus (12) for the long fibre fraction, at least one tank (20) for accommodating thickening water and pipes for returning the thickening water to the processing chain; a pipe (14) for recycling the water to the flotation apparatus (6), a pipe (18) for recycling the water to the fine cleaning apparatus (11) and a pipe (19) for recycling the water to the pulping (1) and pre-cleaning (2) apparatus upstream of the fractional separation stage (3).

7. A plant for the treatment of waste paper according to Claim 6, characterised in that it comprises between the fractional separation apparatus (3) and the fine cleaning apparatus (11), in sequence, a thickening apparatus (9) and a hot slushing unit (10), known per se, for the heat treatment of the pulp and a pipe (16) for carrying away the thickening water (9) which is fed to a tank (21).

8. A treatment plant according to Claim 6, characterised in that it comprises a tank (20) for the recovery of water (7) from thickening the short fibre fraction (4), water (12) from the thickening and washing of the long fibre fraction (5) and a pipe (15) for supplying clean water for starting up the plant, a tank (21) for recovering the water (9) from thickening the long fibre fraction (5); and in that the tanks (20 and 21) communicate such that the overflow from the tank (20) pours into the tank (21).

**Patentansprüche**

1. Verfahren zur Behandlung von Altpapier mit den Verfahrensschritten Stofflösung (1), Vorreinigung (2), Fraktionierung (3) der Paste in lange Fasern und kurze Fasern, Deinking durch Flotation (Schwimmaufbereitung) (6) und Eindicken (7) der Fraktion mit kurzen Fasern und Eindicken (9) der Fraktion mit langen Fasern, dadurch gekennzeichnet, daß die Fraktion mit langen Fasern zumindest einer Eindickungswäsche (12) nach einer Feinreinigung (11) unterworfen wird, und daß das Wasser aus den einzelnen Stufen der Eindickung der beiden Faserfraktionen in der Behandlungskette durch Zurückführung wieder benutzt wird, wobei diese Rückführung durchgeführt wird: auf das Niveau der Flotation (6) der kurzen Fasern, auf das Niveau der Feinreinigung (11) der langen Fasern und stromaufwärts von der Fraktionierung (3), auf der Ebene der Stofflösung (1) und der Vorreinigung (2), um damit gleichzeitig die Abwassermenge, die Verschmutzung und den Wasserverbrauch zu reduzieren.

2. Verfahren zur Behandlung von Altpapier zur Gewinnung von Papierpaste nach Anspruch 1, dadurch gekennzeichnet, daß das Wasser aus der Eindickung (13) der Fraktion mit den kurzen Fasern (4) vorzugsweise in der Deinking-Behandlung (6) wieder verwendet wird und der Überschuß in der Feinreinigung (11) wieder verwendet wird.

3. Verfahren zur Behandlung von Altpapier zur Gewinnung von Papierpaste nach Anspruch 2, dadurch gekennzeichnet, daß das Wasser aus der Eindickung (12) der Fraktion mit den langen Fasern (5) vorzugsweise in der Feinreinigung (11) in Ergänzung zu dem Wasserüberschuß (13) wieder verwendet wird und der Überschuß davon stromaufwärts von der Fraktionierung (3) wieder verwertet wird.

4. Verfahren zur Behandlung von Altpapier zur Gewinnung von Papierpaste nach Anspruch 1, dadurch gekennzeichnet, daß die Fraktion (5) mit den langen Fasern vor der Feinreinigung (11) einer Wärmebehandlung unterworfen wird, die eine Eindickung (9) und eine Zerreibung mit Erwärmung (10) in bekannten Eindick- und Zerreibeapparaten umfaßt.

5. Verfahren zur Behandlung von Altpapier zur Gewinnung von Papierpaste nach einem der Ansprüche 1 bis 4, dadurch gekennzeichnet, daß Einrichtungen zur Regelung der Konzentration der Fraktion (4) mit den kurzen Fasern auf etwa 1 bis 1,5 Volumenprozent für das Deinking (6) durch Flotation und auf etwa 20 % am Ende des Eindickens (7) und zur Regelung der Konzentration der Fraktion (5) mit den langen Fasern auf etwa 30 % am Ende des ersten Eindickens (9), auf zwischen 0,5 bis 1 % in der Feinreinigung (11) und in der Größenordnung von 20 % am Ende des Eindickungswaschens (12) vorgesehen sind.

6. Vorrichtung zur Behandlung von Altpapier zur Ausführung des Verfahrens des Anspruchs 1, mit Einrichtungen zur Stofflösung (1), zur Vorreinigung (2), zur Fraktionierung (3) der Paste in kurze und lange Fasern zum Deinking durch Flotation (6) für die kurzen Fasern und zum Eindicken (7 und 9), dadurch gekennzeichnet, daß sie eine Vorrichtung zur Feinreinigung (11) gefolgt von einer Vorrichtung zum Eindickungswaschen (12) für die Fraktion mit den langen Fasern, wenigstens einen Speicher (20) zur Aufnahme des Wassers aus den Eindickprozessen und Rückleitungen für das Wasser aus den Eindickungsprozessen in die Behandlungskette, eine Leitung (14) zur Rückführung des Wassers zur Flotationsvorrichtung (6), eine Leitung (18) zur Zurückführung des Wassers zu der Feinreinigungsvorrichtung (11) und eine Leitung (19) zur Zurückführung des Wassers zur Stofflösung (1) und Vorreinigung (2) stromauf von der Fraktionierung (3) aufweist.

7. Vorrichtung zur Behandlung von Altpapier nach Anspruch 6, dadurch gekennzeichnet, daß sie zwischen der Fraktionierungseinrichtung (3) und den Feinreinigungseinrichtungen (11) in dieser Reihenfolge eine Eindickungseinrichtung (9) und eine Einrichtung zum Zerreiben unter Wärmeeinfluß (10), die für sich jeweils bekannt sind, zur Bearbeitung der Faste unter Wärmeeinwirkung und eine Leitung (16) zur Abführung des Wassers aus der Eindickung (9), die einen Speicher (21) versorgt, umfaßt.

8. Vorrichtung zur Behandlung nach Anspruch 6, dadurch gekennzeichnet, daß sie ein Becken (20) zur Wiedergewinnung des Wassers aus der Eindickung (7) der Fraktion mit den kurzen Fasern (4), des Wassers aus der Eindickungswäsche (12) der Fraktion mit den langen Fasern (5) mit einer Zuführungsleitung (15) für Frischwasser für das Anfahren der Einrichtung umfaßt, und daß ein Becken (21) für die Wiedergewinnung des Wassers der Eindickung (9) der Fraktion mit den langen Fasern (5) vorgesehen ist, und daß die Becken (20 und 21) dergestalt verbunden sind, daß das Becken (20) sich beim Überlaufen in das Becken (21) entleert.